# EUROPÄISCHE PATENTSCHRIFT

(11) **EP 2 965 941 B1**
(45) Veröffentlichungstag und Bekanntmachung des Hinweises auf die Patenterteilung: **13.09.2017**
(21) Anmeldenummer: 14176348.2
(22) Anmeldetag: 09.07.2014
(51) Int. Cl.: B60L 11/18, H02J 7/02

(54) **Primärteil für ein induktives Ladegerät**
Primary section for an inductive charger
Partie primaire pour un appareil de chargement inductif

(43) Veröffentlichungstag der Anmeldung: 13.01.2016
(73) Patentinhaber: Brusa Elektronik AG, 9466 Sennwald (CH)
(72) Erfinder: Oeschger, Daniel, 9015 St. Gallen (CH); Matt, Phillipp, 6820 Frastanz (AT); Krause, Axel, 9650 Nesslau (CH)
(74) Vertreter: Rösler, Frank

(56) Entgegenhaltungen:
- WO-A2-2011/006884
- DE-A1- 4 236 286
- DE-A1-102011 108 546
- DE-A1-102011 118 397
- FR-A1- 2 732 169

## Beschreibung

Die Erfindung betrifft ein Primärteil eines Ladegeräts, insbesondere zur induktiven Übertragung von Energie von einer Primärspule des Primärteils zu einer Sekundärspule eines zumindest teilweise elektrisch betriebenen Fahrzeugs, nach dem Oberbegriff des Anspruchs 1, sowie ein Ladegerät mit einem derartigen Primärteil.

Für Elektrofahrzeuge, die zumindest teilweise elektromotorisch angetrieben sind, sind Vorrichtungen zur induktiven Übertragung elektrischer Energie von einer Primärspule zu einer Sekundärspule bekannt. Dabei befindet sich die Sekundärspule am oder im Elektrofahrzeug, während die Primärspule ausserhalb des Elektrofahrzeugs angeordnet ist.

Zum Beispiel ist in der DE 102011089339 A1 eine solche Vorrichtung offenbart. Die Vorrichtung umfasst ein Grundelement am Boden des Elektrofahrzeugs, eine, dem Grundelement zugeordnete Sekundärspule, die mit einem Speicher für Elektroenergie energetisch koppelbar ist, wobei zumindest ein Teil der Sekundärspule, insbesondere der Spulenkern relativ zum Grundelement bewegbar gelagert ist.

Die Vorrichtung enthält weiterhin ein Stellglied zur relativen Bewegung des Spulenkerns der Sekundärspule zwischen einer unteren und einer oberen Position in z-Richtung mittels Stellmotor oder auch manuell. In der unteren Position befindet sich die Unterkante des Spulenkerns der Sekundärspule nahe zu einer Fahrbahnoberfläche o. a. In der Fahrbahn ist eine bewegbare Primärspule angeordnet. Hierdurch soll ein adaptives Positionieren der Sekundärspule zur Primärspule mit minimiertem Luftspalt zwischen diesen bei einem Ladevorgang erreicht werden. Der Verfahrweg zwischen oberer und unterer Position ist von der Bodenfreiheit des Elektrofahrzeugs bestimmt. Fährt das Elektrofahrzeug, befindet sich der Spulenkern in der oberen Position, innerhalb des Elektrofahrzeugs, was einen Freiraum für das Stellglied erfordert und den nutzbaren Raum mindert.

Mittels der Vorrichtung soll die Übertragung von Energie bei einem induktiven Ladevorgang verbessert werden. Die Anordnung einer verfahrbaren Sekundärspule erhöht jedoch das Fahrzeuggewicht, was die erzielbare Reichweite reduziert.

Bei einer weiteren Vorrichtung zur kontaktlosen Leistungsversorgung gemäss DE 102012020364 A1 ist in einer Ebene eine Vielzahl von Primärspulen vorgesehen, die gruppenweise in einem Gehäuse angeordnet sind und denen Gruppen von Leistungsversorgungseinheitsschaltungen zugeordnet sind. Zur Unterdrückung von der Anregungsfrequenz der Primärspulen ist eine Vielzahl von Einheitscontrollern vorgesehen, die Synchronisationssignale bereitstellen.

Bei einer Ladeschale zum Laden der Akkus von Hörgeräten ist eine, mit einer Steuereinheit verbundene Sekundärspule zum empfangen elektrischer Energie von einer Primärspule vorgesehen, wobei die Primärspule in einer Ladematte angeordnet ist.

In einer weiteren Vorrichtung zum kontaktlosen Aufladen eines Akkus gemäss DE 102004039651 A1 wird die zum Aufladen notwendige Energie von einer Energiequelle zu einer Energiesenke über ein Wechselfeld übertragen. Die Feldstärke des Wechselfeldes ist dabei grösser als eine mögliche Feldstärke bei gleichzeitiger Übertragung von Daten und Aufladeenergie. Daten werden nicht im Lademodus übertragen, sondern nur in einem ersten Betriebsmodus, weshalb der Ladevorgang schneller ablaufen soll.

Die WO 2011/006884 A2 offenbart ein integriertes Primärgehäuse, in welchem in den geneigten Seitenwänden Lüftungsöffnungen vorgesehen sind, über die innen liegende Ventilatoren Kühlluft im Gehäuse umwälzen können, deren Austritt nach oben hin durch das geschlossene Gehäuse verhindert ist.

Eine fix im Boden verbaute Primärstation ist in der FR 2732169 A1 offenbart. Zu dieser Primärstation führen Zuleitungen sowie Ableitungen für ein Kühlmittel, beispielsweise Luft. Die Kühlluft wird durch einen Ventilator zentral unter der Primärspule nach oben, am oben geschlossenen Gehäuse horizontal und um die Spule herum und wieder nach unten geführt. Die Zu- und Ableitungen verlaufen unterhalb des Bodenniveaus, war nur bei stationären Anlagen möglich ist.

Aufgabe der vorliegenden Erfindung ist es somit, den Ladevorgang bei einer induktiven Übertragung von Energie von einer Primärspule des Primärteils zu einer Sekundärspule zu verbessern und die Benutzungssicherheit beim Ladevorgang zu erhöhen.

Die Aufgabe wird durch die Merkmale der unabhängigen Ansprüche 1 und 14 gelöst. Vorteilhafte Weiterbildungen sind in den Figuren und in den abhängigen Patentansprüchen dargelegt.

Das erfindungsgemässe Primärteil eines kontaktlosen/induktiven Ladegeräts ist das auf dem Boden einer Garage, einer Tankstelle o. a. m. befindliche Element eines induktiven Ladegeräts, um im Betriebszustand elektrische Energie induktiv in einen Energiespeicher eines zumindest teilweise elektrisch betriebenen Kraftfahrzeugs zu übertragen.

Das erfindungsgemässe Primärteil umfasst zumindest ein Gehäuseelement mit Primärspule, erforderlicher Ladeelektronik und eine Anschlussmöglichkeit an das Stromnetz, zum Beispiel ein 230V-Stromnetz, wobei die Primärspule an einer bzw. angrenzend an eine Oberseite des Primärteils angeordnet ist.

Mindestens ein Kanal für Kühlluft geht von einer Eintrittsöffnung im bodennahen Bereich einer Seitenfläche bzw. Umfangsfläche der Bodenplatte des Primärteils aus und weist zumindest einen ansteigenden Teilabschnitt auf.

Erfindungsgemäss mündet mindestens ein Kanal in mindestens einen das Primärteil von unten nach oben durchsetzenden und nach oben offenen Kamin und steigt in zumindest einem Teilabschnitt bis zur Mündung in den mindestens einen Kamin an.

Aufgrund der Verlustleistung der Primärspule entsteht Wärme, die zu einer Erwärmung des Primärteils einer induktiven Ladeeinrichtung im Betriebszustand führt. Von an der Bodenplatte vorbeiströmender Luft wird die, durch die Verlustleistung entstandene Wärme besser abgeführt, was einer zu starken, für elektronische bzw. elektrische Elemente unzulässigen Erwärmung entgegenwirkt.

Vorzugsweise ist der Primärteil mit mindestens zwei, den Primärteil von unten nach oben durchsetzenden Kaminen versehen, was eine weiter verbesserte Wärmeabfuhr gewährleistet.

Bevorzugt ist der Primärteil in Draufsicht im Wesentlichen rechteckig oder rund ausgebildet und sind die Seitenflächen aus Schrägen gebildet. Diese Formgebung bietet ein sehr gutes Verhältnis von Umfang und Fläche, das sowohl für die Wärmeabfuhr als auch für die induktive Energieübertragung vorteilhaft ist.

Durch die Merkmale, dass der mindestens eine Kanal nach unten zumindest teilweise offen und nutartig ausgebildet ist, wobei sich vorzugsweise der Nutquerschnitt in Richtung des Kamins verringert, kann die Zufuhr der Kühlluft über die gesamte Länge des Kanals erfolgen, kann der Kanal einfach und rasch gereinigt werden und wird gleichzeitig eine Vergrösserung der für den Wärmeaustausch Primärteil-Kühlluft verfügbaren Oberfläche erzielt.

Der Luftzutritt wird weiter erleichtert, wenn die Unterseite des Primärteils mit Mitteln zur Herstellung eines Abstandes bzw. Freiraums vom Boden versehen ist.

Bevorzugt ist der Kamin zentral in z-Richtung gelegen, was eine gute mechanische Stabilität des Primärteils gewährleistet. Der Kamin ist bevorzugt auch mit zum Zentrum des Kamins weisenden Kühlrippen versehen, um damit die für den Wärmeaustausch Primärteil-Kühlluft verfügbare Oberfläche weiter zu vergrössern.

An jeder Schräge kann mindestens eine Eintrittsöffnung eines, in den Kamin mündenden Kanals vorgesehen sein, um selbst bei Abschottung einer bis drei Seiten des Primärteils eine Kühlwirkung aufrecht zu erhalten.

Vorzugsweise ist bei einer weiteren erfindungsgemässen Ausführungsform des Primärteil die Primärspule in z-Richtung hubfähig ausgebildet.

Bei einer derartigen Ausführungsform ist bevorzugt die Primärspule mittels eines Hubmittels mit einem Faltenbalg hubfähig, wobei der angehobene Faltenbalg einen dichten, beweglichen Vorhang bildet, der zumindest einen Kamin umschliesst. Dies verbessert die Kaminwirkung und damit die Luftströmung sowie die Kühlwirkung auf den Primärteil.

Ebenso kann eine Erhöhung des Luftdurchsatzes zur Verbesserung der Kühlwirkung dadurch erzielt werden, dass ein Lüfter im Kamin eingesetzt ist.

Um ein Verschmutzen des Kamins und der Kühlkanäle von oben her, mit folglichem Abnehmen der Kühlwirkung, zu verhindern, kann der Kamin an oder nahe der Oberseite des Primärteils mit einem, nicht überstehenden Dach abdeckbar sein.

Um einerseits eine gute Kühlwirkung und gleichzeitig eine möglichst grosse Fläche für die Primärspule zu gewährleisten, ist die Primärspule ring- oder rechteckförmig den/die Kamin(e) umschliessend im Primärteil angeordnet.

Dabei kann zur Flächenoptimierung der Primärspule für eine gute Energieübertragung die Primärspule in der Draufsicht einen rechteckigen oder runden Querschnitt aufweisen. Die rechteckige oder speziell quadratische Form der Primärspule wird vorzugsweise mit abgerundeten Eckbereichen ausgeführt sein. Prinzipiell sind auch alle Übergangsformen und gegebenenfalls auch unregelmässige geometrischen Formen möglich, wenn baulich notwendig.

Die eingangs gestellte Aufgabe wird auch erfindungsgemäss gelöst durch ein Ladegerät zur induktiven Übertragung von Energie, umfassend ein Primärteil nach einem der obigen Absätze. Dieser Primärteilt ist dazu auch mit einer Primärspule versehen, der im Betriebszustand eine Sekundärspule eines zumindest teilweise elektrisch betriebenen Fahrzeugs zuordenbar ist.

Bevorzugt ist der Primärteil dieses Ladegerätes mit mindestens einem, den Primärteil von unten nach oben durchsetzenden und nach oben offenen Kamin versehen, in den mindestens ein Kanal mündet, dessen Eintrittsöffnung im bodennahen Bereich einer Seitenfläche der Bodenplatte des Primärteils gelegen ist und der zumindest in einem Teilabschnitt bis zur Mündung in den mindestens einen Kamin ansteigt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: ein erfindungsgemässes Primärteil in Seitenansicht;
- Fig. 2: das Primärteil nach Fig. 1 von unten gesehen;
- Fig. 3: das Primärteil nach Fig. 1 mit Dach;
- Fig. 4: das Primärteil nach Fig. 1 mit zusätzlichem Lüfter;
- Fig. 5: das Primärteil nach Fig. 1 mit Primärspulenhub zur Kaminerhöhung;
- Fig. 6: ein erfindungsgemässes Primärteil in einer weiteren, bevorzugten Ausführungsform.

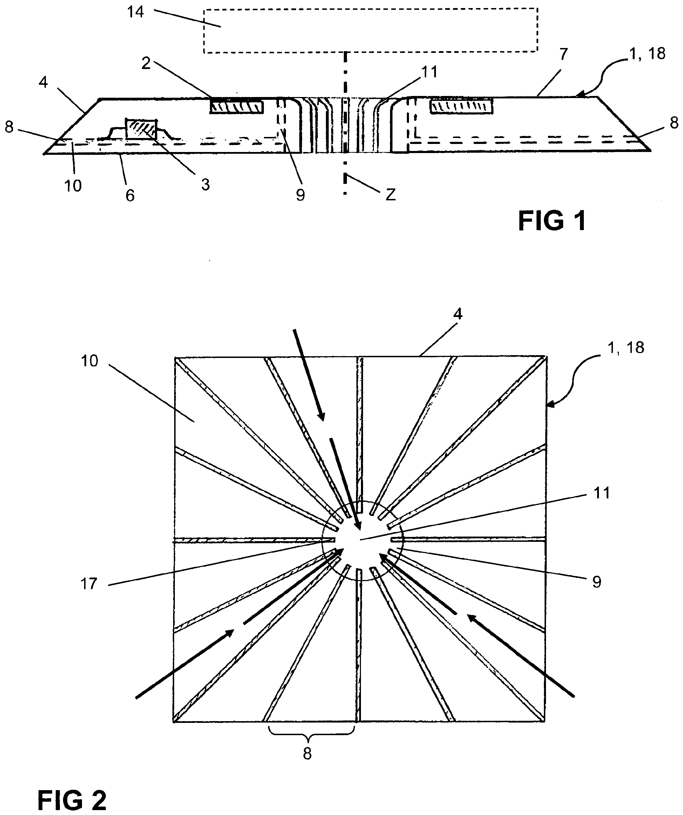

Die Fig. 1, 2 oder 6 zeigen ein überfahrfestes Primärteil 1 eines Ladegeräts zur induktiven Übertragung von Energie von einer im Beispiel ringförmigen Primärspule 2 zu einer Sekundärspule 14 am Fahrzeugboden und von da in eine Batterie eines zumindest teilweise elektrisch betriebenen, nicht dargestellten Fahrzeugs. Die Primärspule 2 ist in einer Bodenplatte 18 (Gehäuseelement) des Primärteils 1 (GPM) angeordnet. Die Fig. 7 zeigt eine bevorzugte Ausführungsform, die Figuren 1 oder 2 eine vereinfachte Darstellung.

Die Höhe des Primärteils 1 soll möglichst gering sein und beträgt im Beispiel ca. 6cm. Das Primärteil besteht bevorzugt aus einem leichtmetallischen Werkstoff oder einem wärmebeständigen und mechanisch belastbaren Kunststoff.

Die Primärspule 2 ist bevorzugt quadratisch ausgebildet und könnte auch rechteckförmig ausgebildet sein. Dabei sind die Eckbereiche typischerweise abgerundet. Auch im Wesentlichen runde Spulengeometrien oder wenn notwendig unregelmässige geometrischen Formen sind möglich.

Das Primärteil 1 entspricht in seiner Grundform einem flachen Kegel- oder Pyramidenstumpf mit Schrägen 4 als Seiten- oder Umfangsflächen und somit einer Unterseite 6, deren Fläche grösser ist als die Fläche der Oberseite 7. Flächenübergänge können gerundet oder "verschliffen" sein. Ggf. können die Seiten- oder Umfangsflächen 4 auch senkrecht zur Unter- und Oberseite 6, 7 gelegen sein.

Die Primärspule 2 ist bevorzugt im Innern der Bodenplatte 18, nahe der Oberseite 7, oder auch in einer Aussparung an der Oberseite 7 des Primärteils 1 angeordnet und ist mit einer Ladeelektronik 3 verbunden.

Die Primärspule 2 kann bündig mit der Oberseite 7 abschliessen oder auch etwas ins Innere des Primärteils 1 versetzt sein. Die Primärspule 2 weist, in der Draufsicht senkrecht auf die Oberseite 7 des Gehäuseelements 18, im Beispiel einen rechteckigen Querschnitt auf, doch ist ebenso ein elliptischer oder runder Querschnitt möglich.

Das Primärteil 1 ist in z-Richtung, senkrecht zur Bodenebene, mit zumindest einem Kamin 11, gegebenenfalls mit mehreren, voneinander beabstandeten Kaminen 11, mit bevorzugt kreisrundem Querschnitt versehen. In diese Kamine 11 münden Kanäle 10 mit ihren Austrittsöffnungen 9. Der Querschnitt der Kamine 11 kann auch oval, schlitzförmig oder unregelmässig geformt sein.

Die Kanäle 10 beginnen an Eintrittsöffnungen 8 bodennah an den Schrägen 4 oder anderen Seitenflächen und weisen zum Beispiel einen runden Querschnitt auf. An allen Seitenflächen bzw. Schrägen 4 ist mindestens eine Eintrittsöffnung 8 für einen Kanal 10 vorgesehen. Bevorzugt sind, wie dargestellt, jedoch mehrere Kanäle 10 pro Seitenfläche 4 vorgesehen.

Austrittsöffnungen 9 weiterer Kanäle 10 könnten aber auch an anderen Stellen der Oberseite 7, bevorzugt nahe zur Primärspule 2, gelegen sein. Damit ist eine noch unmittelbarere Kühlung speziell dieser Primärspule 2 möglich.

Die Kanäle 10 weisen zumindest in einem Teilbereich, bevorzugt über ihren gesamten Verlauf einen positiven, gegebenenfalls stetigen, Anstiegswinkel von der Eintrittsöffnung 8 bis zur Austrittsöffnung 9 auf. Oftmals sind jedoch im Wesentlichen horizontal verlaufende Abschnitte 10 vorgesehen, die in im Wesentlichen vertikale Austrittsöffnungen 9 übergehen, wie in den Fig. 1 bis 4 dargestellt.

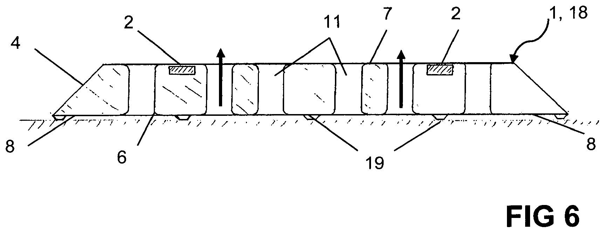

Die Kamine 11 sind so angeordnet, dass die Ladeelektronik und/oder eine mögliche Anordnung von Noppen 19 (siehe Fig. 6) an der Unterseite 6 des Primärteils 1 bzw. der Bodenplatte 18 dadurch nicht beeinträchtigt wird, insbesondere in Bezug auf die mechanische Festigkeit der Bodenplatte 18. Die Kanäle 10 bzw. Kanalnuten sind auf alle Kamine 11 gerichtet. Das zwischen den Kaminen 11 verbleibende Material der Bodenplatte 18 wirkt wie Stützpfeiler. Wie in Fig. 6 beispielhaft dargestellt können die Kamine 11 auch Bestandteil durchbohrter, in der Bodenplatte 18 vorgesehener Stützpfeiler sein.

Durch die Noppen 19, mit welchen allein die Bodenplatte 18 auf dem Untergrund aufliegen und Kontakt machen kann, vergrössert sich der verfügbare Raum für die strömende Luft im Bodenbereich und damit auch der für die Kühlung nutzbare Luftdurchsatz.

Die Kamine 11 können "formgebend" in Mustern angeordnet und auch von unten resp. innen beleuchtet sein.

Die Kanäle 10 können bevorzugt nach unten zumindest teilweise offen und somit nutförmig ausgebildet sein, so dass kühle Luft am Boden unter dem Primärteil 1 ansteigend zum Kamin 11 strömen kann. Durch geeignete Dimensionierung (nicht dargestellt) der Nut-Zwischenräume kann die Luftmenge für eine kontinuierliche und effiziente Kühlung des Primärteils 1 resp. der Spulen 2 gesteuert werden. Der Querschnitt der Kanäle 10 verringert sich im dargestellten Beispiel in Richtung zu den Kaminen 11 hin, was aber nicht zwingend vorgesehen sein muss.

In dieser Ausgestaltung können die Kanäle 10 zum Beispiel einfach nutförmig in die Unterseite 6 des Primärteils 1 gefräst werden und sind aufgrund ihrer offenen Ausführung auch problemlos zu reinigen.

Die sich zwischen den Kanalnuten bildenden Rippen können als zur Verstärkung der Kühlleistung als Kühlrippen 17 bis in die Kamine 11 reichen.

Das Primärteil 1 kann ggf. in z-Richtung, senkrecht zur Bodenebene, mit nur einem zentral gelegenen Kamin 11 versehen sein.

Zur Herstellung eines Betriebszustandes zur induktiven Übertragung von elektrischer Energie wird eine Sekundärspule 14 in einem Sekundärteil (CPM) des Ladegeräts über der Primärspule 2 des Primärteils 1 positioniert.

Der Abstand in z-Richtung zwischen Primärspule 2 und Sekundärspule 14 sollte möglichst gering sein.

Da die Lufttemperatur am Boden im Normalfall geringer ist als an der Oberseite 7 des Primärteils 1 wird die Luft durch die Eintrittsöffnungen 8 angesaugt, durchströmt die Kanäle 10 und verlässt diese über die Austrittsöffnungen 9. Die durch den Kamin 11 abgeführte Luft kühlt beim weiteren Aufsteigen, beispielsweise zum Sekundärteil des induktiven Ladesystems, ab und kann somit im Betriebszustand des Ladegeräts auch kühlend auf den Sekundärteil und dessen Sekundärspule 14 wirken. Eine Kühlwirkung wird auch durch die erhöhte Geschwindigkeit der um den Sekundärteil strömenden Luft erzielt.

Luft kann auch an den Schrägen 4 entlang nach oben strömen und die Kühlwirkung erhöhen.

Zudem können die Kamine 11 und die Kühlrippen 17 auch ohne Luftströmung durch die Kanäle 10 zur Kühlung der Primärspule 2 resp. des Primärteils 1 beitragen.

Aufgrund der geringen Bauhöhe des Primärteils 1 ist der Kamineffekt begrenzt, so dass die Kühlleistung bei Bedarf durch weitere Massnahmen erhöht werden kann.

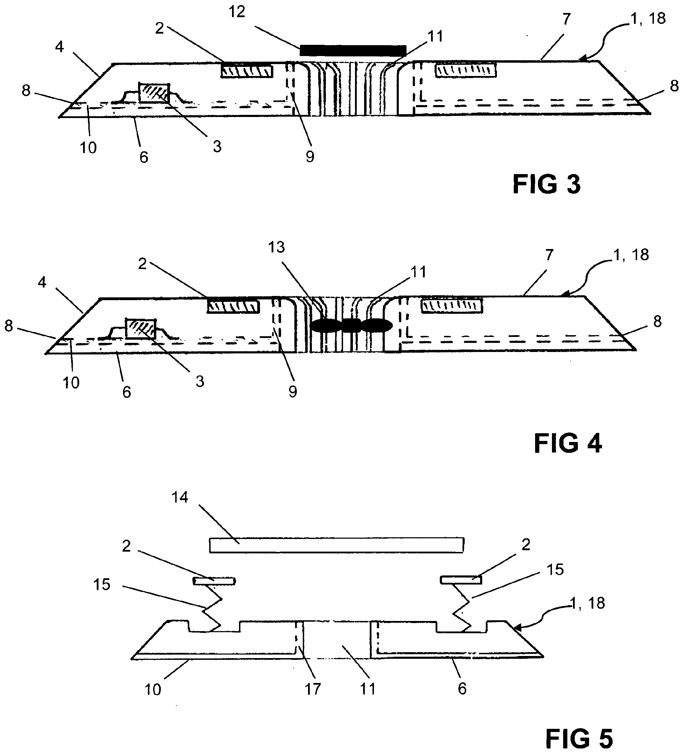

Es ist möglich, einen Lüfter 13 (Fig. 4) im Kamin 11 anzuordnen, der einen, gegenüber der natürlichen Konvektionsströmung grösseren Luftstrom erzeugen kann. Die Saugleistung des Lüfters 13 kann an die erzeugte Verlustleistung der Primärspule 2 und/oder der Ladeelektronik 3 angepasst sein.

Der Lüfter 13 soll medienbeständig und verschmutzungsresistent sein. Der Lüfter 13 soll auch eine Umkehrung der Luftstromrichtung ermöglichen, um die Kanäle 10, Lufteintrittsöffnungen 8 und Kamine 11 von Schmutz zu reinigen (Ausblasfunktion).

Weiterhin könnten die Öffnungen 8, 9 der Kanäle 10 und die Öffnung der Kamine 11 mit Schutzgittern oder dergleichen versehen werden.

Um eine Verschmutzung der Kamine 11 zu vermeiden oder zu verringern, kann dieser auch an der Oberseite 7 über oder in der Öffnung des Kamins 11 mit einem hubfähigen Dach 12 abgedeckt sein (Fig. 3). Das Dach 12 kann auch als Abdeckhaube mit Öffnungen versehen und fest angeordnet sein. Das Dach 12 kann überstehend sein, d. h. einen grösseren Durchmesser als der Kamin 11 aufweisen. Es könnte aber auch hubfähig im Kamin 11, d.h. mit einem dem Innendurchmesser des oberen Kaminendes entsprechendem Aussendurchmesser, angeordnet sein.

Das Dach 12 kann mit einem Logo versehen sein und auch Sensormittel der Fahrzeugsteuerung zur Positionierung des Fahrzeugs resp. der Sekundärspule 14 über der Primärspule 2 enthalten.

Zur Vergrösserung der Kühlleistung könnte alternativ oder in Ergänzung zum Lüfter 13 in einer weiteren Ausführungsform die Primärspule 2 in z-Richtung hubfähig ausgebildet sein. Heben und Senken der Primärspule 2 kann zum Beispiel mittels eines Teleskops oder Scherenhebers erfolgen, der einen Faltenbalg 15 (Fig. 5) betätigt. Dies ermöglicht einerseits eine genauere Positionierung der Primärspule 2 zur Sekundärspule 14 und andererseits infolge der "Kaminerhöhung" durch den Faltenbalg 15 eine Erhöhung der Kaminwirkung und somit der Kühlung sowohl der Primärspule 2 als auch der Sekundärspule 14.

Der angehobene Faltenbalg 15 bildet einen dichten, beweglichen Vorhang oder Kanal, der den durch das Anheben entstehenden Freiraum oder zumindest den Kamin 11 umschliesst. Anstelle eines Faltenbalges 15 sind auch andere Element zur Bildung eines Vorhanges, Kanals oder einer Kaminverlängerung denkbar, beispielsweise Membranen, vorzugsweise elastisch, oder im Wesentlichen starre, aus Ausnehmungen ausfahrbare Röhren od.dgl. Die Anhebung der Primärspule 2 zur Annäherung an die Sekundärspule 14 trägt auch zur Verbesserung der induktiven Energieübertragung zwischen Primärteil 1 und Sekundärteil bei.

Weitere mögliche Ausführungsformen umfassen durch den Boden des Gehäuses, d.h. der Bodenplatte 18, nach unten abgeschlossene Kanäle 10. Diese Konstruktionsarten entsprechen dann einer Platte mit Zwangs-Unterlüftung oder mit einem liegenden Kamin 11 mit Zwangsbelüftung.

Zur zielgenauen Positionierung der Sekundärspule 14 zur Primärspule 2 könnte zum Beispiel ein adaptierter Parkassistent verwendet werden.

Der Ladevorgang kann zum Beispiel mittels einer App gestartet und bei Erreichung des maximalen Speichervermögens der Batterie beendet werden.

Mittels nicht dargestellter, fachüblicher Mittel kann das Primärteil 1 am Boden verankert und eine Stromversorgung gesichert werden.

### Bezugszeichenliste

- 1: Primärteil
- 2: Primärspule
- 3: Ladeelektronik
- 4: Schräge/Seitenfläche

- 6: Unterseite
- 7: Oberseite
- 8: Eintrittsöffnung
- 9: Austrittsöffnung
- 10: Kanal
- 11: Kamin
- 12: Dach
- 13: Lüfter
- 14: Sekundärspule
- 15: Faltenbalg

- 17: Kühlrippe
- 18: Bodenplatte
- 19: Noppen
- z: Achse/Richtung

## Patentansprüche

1. Primärteil für ein Ladegerät, mit einer Unterseite (6) und einer Oberseite (7) sowie den Primärteil (1) begrenzenden Seitenflächen, und mit einer Primärspule (2) zur induktiven Übertragung von Energie zu einer Sekundärspule (14) eines zumindest teilweise elektrisch betriebenen Fahrzeugs, wobei die Primärspule (2) mit einer Ladeelektronik (3) verbunden und an der oder angrenzend an die Oberseite (7) des Primärteils (1) angeordnet ist, wobei mindestens ein Kanal (10) von einer Eintrittsöffnung (8) im bodennahen Bereich einer der Seitenflächen des als Bodenplatte ausgebildeten Primärteils (1) ausgeht und zumindest einen ansteigenden Teilabschnitt aufweist, **dadurch gekennzeichnet, dass** der Kanal (10) in mindestens einen das Primärteil (1) von unten nach oben durchsetzenden und nach oben hin offenen Kamin (11) mündet und in zumindest einem Teilabschnitt bis zur Mündung in den mindestens einen Kamin (11) ansteigt.

2. Primärteil nach Anspruch 1, **dadurch gekennzeichnet, dass** es mit mindestens zwei, den Primärteil (1) von unten nach oben durchsetzenden Kaminen (11) versehen ist.

3. Primärteil nach Anspruch 1 oder 2, **dadurch gekennzeichnet, dass** es in Draufsicht im Wesentlichen rechteckig oder rund ausgebildet ist und dass die Seitenflächen aus Schrägen (4) gebildet sind.

4. Primärteil nach einem der Ansprüche 1 bis 3, **dadurch gekennzeichnet, dass** der mindestens eine Kanal (10) nach unten zumindest teilweise offen und nutartig ausgebildet ist, wobei sich vorzugsweise der Nutquerschnitt in Richtung des Kamins (11) verringert.

5. Primärteil nach einem der Ansprüche 1 bis 3, **dadurch gekennzeichnet, dass** die Unterseite (6) des Primärteils (1) mit Mitteln zur Herstellung eines Abstandes bzw. Freiraums vom Boden versehen ist.

6. Primärteil nach einem der Ansprüche 1 bis 5, **dadurch gekennzeichnet, dass** der Kamin (11) zentral in z-Richtung gelegen und mit zum Zentrum des Kamins (11) weisenden Kühlrippen (17) versehen ist.

7. Primärteil nach einem der Ansprüche 1 bis 6, **dadurch gekennzeichnet, dass** an jeder Schräge (4) mindestens eine Eintrittsöffnung (8) eines, in den Kamin (11) mündenden Kanals (10) vorgesehen ist.

8. Primärteil nach einem der Ansprüche 1 bis 7, **dadurch gekennzeichnet, dass** die Primärspule (2) in z-Richtung hubfähig ausgebildet ist.

9. Primärteil nach Anspruch 8, **dadurch gekennzeichnet, dass** die Primärspule (2) mittels eines Hubmittels mit einem Faltenbalg (15) hubfähig ist, wobei der angehobene Faltenbalg (15) einen dichten, beweglichen Vorhang bildet, der zumindest einen Kamin (11) umschliesst.

10. Primärteil nach einem der Ansprüche 1 bis 9, **dadurch gekennzeichnet, dass** ein Lüfter (13, 16) im Kamin (11) eingesetzt ist.

11. Primärteil nach einem der Ansprüche 1 bis 10, **dadurch gekennzeichnet, dass** der Kamin (11) an oder nahe der Oberseite (7) des Primärteils (1) mit einem, nicht überstehenden Dach (12) abdeckbar ist.

12. Primärteil nach einem der Ansprüche 1 bis 11, **dadurch gekennzeichnet, dass** die Primärspule (2) ring- oder rechteckförmig den/die Kamin(e) (11) umschliessend im Primärteil (1) angeordnet ist.

13. Primärteil nach einem der Ansprüche 1 bis 12, **dadurch gekennzeichnet, dass** die Primärspule (2) einen rechteckigen oder gerundeten Querschnitt aufweist.

14. Ladegerät zur induktiven Übertragung von Energie, umfassend ein Primärteil (1) nach einem der Ansprüche 1 bis 13, mit einer Primärspule (2), der im Betriebszustand eine Sekundärspule (14) eines zumindest teilweise elektrisch betriebenen Fahrzeugs zuordenbar ist.

15. Ladegerät nach Anspruch 14, **dadurch gekennzeichnet, dass** das Primärteil (1) mit mindestens einem, den Primärteil (1) von unten nach oben durchsetzenden und nach oben offenen Kamin (11) versehen ist, in den mindestens ein Kanal (10) mündet, dessen Eintrittsöffnung (8) im bodennahen Bereich einer Seitenfläche der Bodenplatte (18) des Primärteils (1) gelegen ist und der zumindest in einem Teilabschnitt bis zur Mündung in den mindestens einen Kamin (11) ansteigt.

## Claims

1. A primary section for a charger, having an underside (6) and a top side (7) and side faces delimiting the primary section (1), and having a primary coil (2) for the inductive transmission of energy to a secondary coil (14) of a vehicle that is at least partially electrically driven, the primary coil (2) being connected to an electronic charging system (3) and being arranged on or adjacent to the top side (7) of the primary section (1), at least one channel (10) emanating from an inlet opening (8) in the region near the bottom of one of the side faces of the primary section (1) in the form of a baseplate and having at least one rising portion, **characterised in that** the channel (10) opens into at least one chimney (11), which passes upwards through the primary section (1) and is open at the top, and rises in at least one portion until it opens into the at least one chimney (11).

2. The primary section according to claim 1, **characterised in that** it is provided with at least two chimneys (11) passing upwards through the primary section (1).

3. The primary section according to claim 1 or 2, **characterised in that** it is substantially rectangular or round as seen from above, and the side faces are formed by slopes (4).

4. The primary section according to any one of claims 1 to 3, **characterised in that** the at least one channel (10) is groove-like and at least partially open towards the bottom, wherein the groove cross-section preferably decreases in the direction of the chimney (11).

5. The primary section according to any one of claims 1 to 3, ,**characterised in that** the underside (6) of the primary section (1) is provided with means for producing a distance or clearance from the base.

6. The primary section according to any one of claims 1 to 5, **characterised in that** the chimney (11) is placed centrally in the z direction and is provided with cooling fins (17) pointing towards the centre of the chimney (11).

7. The primary section according to any one of claims 1 to 6, **characterised in that** at least one inlet opening (8) of a channel (10) opening into the chimney (11) is provided on each slope (4).

8. The primary section according to any one of claims 1 to 7, **characterised in that** the primary coil (2) can be lifted in the z direction.

9. The primary section according to claim 8, **characterised in that** the primary coil (2) can be lifted by means of a lifting means with bellows (15), wherein the raised bellows (15) form a leakproof, movable curtain that encloses at least one chimney (11).

10. The primary section according to any one of claims 1 to 9, **characterised in that** a fan (13, 16) is used in the chimney (11).

11. The primary section according to any one of claims 1 to 10, **characterised in that** the chimney (11) can be covered, on or close to the top side (7) of the primary section (1), with a non-projecting roof (12).

12. The primary section according to any one of claims 1 to 11, **characterised in that** the primary coil (2) is arranged in the primary section (1) such that said primary coil encloses the chimney (s) (11) in an annular or rectangular manner.

13. The primary section according to any one of claims 1 to 12, **characterised in that** the primary coil (2) has a rectangular or rounded cross-section.

14. A charger for the inductive transmission of energy, comprising a primary section (1) according to one of claims 1 to 13, having a primary coil (2), to which can be assigned, during operation, a secondary coil (14) of a vehicle that is at least partially electrically driven.

15. The charger according to claim 14, **characterised in that** the primary section (1) is provided with at least one chimney (11), which passes upwards through the primary section (1) and is open at the top and into which at least one channel (10) opens, the inlet opening (8) of which is placed in the region near the bottom of a side face of the baseplate (18) of the primary section (1) and which rises at least in one portion until it opens into the at least one chimney (11).

## Revendications

1. Partie primaire pour appareil de chargement, comprenant une face inférieure (6) et une face supérieure (7) ainsi que des surfaces latérales limitant la partie primaire (1) et comprenant une bobine primaire (2) pour le transfert inductif d'énergie à une bobine secondaire (14) d'un véhicule fonctionnant du moins partiellement à l'électricité, la bobine primaire (2) étant raccordée à une électronique de chargement (3) et disposée au niveau de ou adjacente à la face supérieure (7) de la partie primaire (1), au moins un canal (10) sortant d'une ouverture d'entrée (8) dans la partie proche du sol d'une des surfaces latérales de la partie primaire (1) réalisée sous forme de plaque de sol et présentant au moins une sous-section montante, **caractérisée en ce que** le canal (10) débouche dans au moins une cheminée ouverte (11) traversant de bas en haut la partie primaire (1) et ouverte vers le haut et montant dans au moins une sous-section jusqu'à l'embouchure dans l'au moins un cheminée (11).

2. Partie primaire selon la revendication 1, **caractérisée en ce qu'**elle est pourvue de deux cheminées (11) traversant la partie primaire (1) du bas vers le haut.

3. Partie primaire selon la revendication 1 ou 2, **caractérisée en ce que**, vue du dessus, elle a une conformation sensiblement rectangulaire ou ronde et que les surfaces latérales sont composées de biseaux (4).

4. Partie primaire selon une des revendications 1 à 3, **caractérisée en ce que** l'au moins canal (10) a une conformation du moins partiellement ouverte et en forme de rainure vers le bas, la section transversale de la rainure se rétrécissant de préférence en direction de la cheminée (11).

5. Partie primaire selon une des revendications 1 à 3, **caractérisée en ce que** la face inférieure (6) de la partie primaire (1) est pourvue de moyens d'établissement d'une distance ou d'un espace libre par rapport au sol.

6. Partie primaire selon une des revendications 1 à 5, **caractérisée en ce que** la cheminée (11) est située au centre dans le sens z et est pourvue de nervures de refroidissement (17) tournées vers le centre de la cheminée (11).

7. Partie primaire selon une des revendications 1 à 6, **caractérisée en ce qu'**il est prévu au niveau de chaque biseau (4) une ouverture d'entrée (8) d'un canal (10) débouchant dans la cheminée (11).

8. Partie primaire selon une des revendications 1 à 7, **caractérisée en ce que** la bobine primaire (2) est réalisée de manière à pouvoir être levée dans le sens z.

9. Partie primaire selon la revendication 8, **caractérisée en ce que** la bobine primaire (2) peut être levée au moyen d'un moyen de levage comportant un soufflet (15), le soufflet levé (15) constituant un rideau compact et mobile qui entoure au moins une cheminée (11).

10. Partie primaire selon une des revendications 1 à 9, **caractérisée en ce qu'**un ventilateur (13, 16) est inséré dans la cheminée (11).

11. Partie primaire selon une des revendications 1 à 10, **caractérisée en ce que** la cheminée (11) peut être recouverte au niveau de ou à proximité de la face supérieure (7) d'un toit non proéminent (12).

12. Partie primaire selon une des revendications 1 à 11, **caractérisée en ce que** la bobine primaire (2) est disposée dans la partie primaire (1) en entourant la ou les cheminées (11) en une forme annulaire ou rectangulaire.

13. Partie primaire selon une des revendications 1 à 12, **caractérisée en ce que** la bobine primaire (2) présente une section transversale rectangulaire ou arrondie.

14. Appareil de chargement pour le transfert inductif d'énergie, comprenant une partie primaire (1) selon une des revendications 1 à 13 dotée d'une bobine primaire (2) à laquelle, en état de fonctionnement, une bobine secondaire (14) d'un véhicule fonctionnant du moins partiellement à l'électricité peut être associée.

15. Appareil de chargement selon la revendication 14, **caractérisée en ce que** la partie primaire (1) est pourvue d'au moins une cheminée (11) traversant la partie primaire (1) du bas vers le haut et ouverte vers le haut, dans laquelle débouche au moins un canal (10) dont l'ouverture d'entrée (8) se situe dans la partie proche du sol d'une surface latérale de la plaque de sol (18) de la partie primaire (1) et qui monte au moins dans une sous-section jusqu'à l'embouchure dans l'au moins une cheminée (11).
